# EUROPEAN PATENT APPLICATION

(11) **EP 1 703 109 A2**
(43) Date of publication of application: **20.09.2006**
(21) Application number: 06111264.5
(22) Date of filing: 16.03.2006
(51) Int. Cl.: F02D 41/20, F02D 41/40, F02D 41/22

(54) **Fuel injection systemfor internal combustionengine equipprd with injectors energized through capacitors**

(30) Priority: 17.03.2005 JP 2005076469
(71) Applicant: DENSO CORPORATION, Kariya City Aichi 448-8661 (JP)
(72) Inventor: KIKUTANI, Takashi, Kariya-city Aichi 448-8661 (JP)
(74) Representative: TBK-Patent

(57) **Abstract**

A fuel injection system for internal combustion diesel engines is provided which is designed to produce a sequence of multiple injections of fuel into each cylinder of the engine. The sequence of multiple injections is split into, for example, a first and a second groups. The system is equipped with, for example, two capacitors which is discharged to energize electronically controlled fuel injectors to achieve the fuel injections. Each of the capacitors is used for one of the first and second groups, thereby permitting the capacitors to be reduced in capacitance or size thereof. A production method of such a system is also provided.

## Description

### BACKGROUND OF THE INVENTION

### 1 Technical Field of the Invention

The present invention relates generally to a fuel injection system for internal combustion engines which is designed to spray fuel into cylinders of the engine multiple times in each combustion cycle, and more particularly, to a compact structure of such a system designed to energize injectors using capacitors and a production method thereof.

### 2 Background Art

Publication of a Translation of an International Application No. 10-510027 teaches a fuel injection system of the type, as described above, which is designed to produce a post injection of fuel into each cylinder of an internal combustion engine within a retard range of 100° to 270° CA (Crank Angle) after TDC (Top Dead Center) of the piston for the purpose of purifying a catalytic converter installed in an exhaust system of the engine in addition to a pilot injection and a main injection of fuel into the engine when the piston is near the TDC for the purpose of producing a torque output of the engine. The fuel injection system is equipped with two capacitors each for two of the cylinders of the four-cylinder engine.

One of the pilot and main injections may overlap the post injection between the two of the cylinders sharing one of the capacitors. Increasing of the cylinders of the engine may, thus, result in a difficulty in completing the pilot, main, and post injections in all the cylinders of the engine.

Each of the capacitors is required to have a capacitance great enough to complete all the injections, thus requiring the need for installation of the large-sized capacitors in the fuel injection system. This also results in an increased overall size of the fuel injection system.

In recent years, for enhancing the performance of the vehicle, parts to be mounted in the vehicle have increased. Additionally, there has been an increasing need for expanding the space of a cabin of the vehicle as much as possible. This results in tightened requirements on the dimensions and shape of casing of the fuel injection system. The capacitors usually occupy a large volume of the casing and will be obstacles to meeting such requirements.

Particularly, in recent years, there has been an increasing need for increasing fuel injection shots in each combustion cycle of the engine. This requires the need for a great capacitance of capacitors required to achieve such multi-injection shots, thus leading to an increase in volume or size of the capacitors and increasing a difficulty in meeting the requirements on the dimensions and shape of the casing of the fuel injection system.

### SUMMARY OF THE INVENTION

It is therefore a principal object of the invention to avoid the disadvantages of the prior art.

It is another object of the invention to provide a fuel injection system for internal combustion engines which is designed to ensure the stability in achieving multiple injections of fuel into the engine in each combustion cycle of the engine using electronically controlled fuel injectors and a production method of a casing of such a system which meets modern dimensions and shape thereof.

According to one aspect of the invention, there is provided a fuel injection system for an internal combustion engine which may be installed in automotive vehicles. The fuel injections system comprises: (a) an electronically controlled injector which works to spray fuel into a cylinder of an engine; (b) a first and a second capacitor selectively working to energize the injector to produce a spray of the fuel; (c) a switch circuit working to selectively connect one of the first and second capacitors to the injector to discharge the one to energize the injector; and (d) a controller working to control an operation of the injector to achieve a sequence of multiple injections of the fuel into the cylinder of the engine in each combustion cycle of the engine. The controller splits the sequence of multiple injections into a first injection group serving to produce a torque output of the engine and a second injection group serving to recover an after-treatment device of the engine. The controller actuates the switch circuit to selectively establish a connection of the first capacitor to the injector to achieve the first injection group and a connection of the second capacitor to the injector to achieve the second injection group.

Specifically, each of the first and second injection groups uses one of separate capacitors. For instance, fuel injections belonging to the second injection group are performed after fuel injections of the first injection group, e.g., during an exhaust stroke of the engine. In the case where each of two capacitors is used for both the first and second injection groups in each combustion cycle of the engine, each capacitor is required to complete all the fuel injections and have a greater capacitance. If the engine is a multi-cylinder engine, the time required to complete a single sequence of injections of fuel into each cylinder will be long, so that it overlap between any two or some of the cylinders.

The fuel injection system of the invention is designed to use each of the first and second capacitors for one of the first and second injection groups in each combustion cycle of the engine even during the injection overlapping period, thus permitting the capacitance of each of the capacitors to be decreased. In other words, the size of the capacitors may be reduced. This allows a casing in which the fuel injection system is to be mounted to be reduced in size.

In the preferred mode of the invention, the first capacitor is greater in capacitance than the second capacitor.

The fuel injection system may further comprise a step-up transformer working to step-up a voltage, as produced by a battery, and supply the voltage to the first and second capacitors and a current circuit working to supply power, as produced by the battery, directly to the injector.

The controller also works to monitor whether the first capacitor used to achieve the first injection group is malfunctioning or not. When it is determined that the first capacitor is malfunctioning, the controller controls the switch circuit to use the second capacitor to complete the first injection group.

According to the second aspect of the invention, there is provided a fuel injection system for an internal combustion engine which comprises: (a) electronically controlled injectors each of which works to spray fuel into one of cylinders of an engine; (b) a first and a second capacitor selectively working to energize the injectors to produce sprays of the fuel; (c) a switch circuit working to selectively connect one of the first and second capacitors to a corresponding one of the injectors to discharge the one of the first and second capacitors to energize the corresponding one of the injectors; (d) a controller working to control an operation of each of the injectors to achieve a sequence of multiple injections of the fuel into the one of the cylinders of the engine in each combustion cycle of the engine, the controller splitting the sequences of multiple injections into a first injection group and a second injection group, the controller actuating the switch circuit to selectively establish a connection of the first capacitor to the injectors to achieve the first injection group and a connection of the second capacitor to the injectors to achieve the second injection group; and (e) a casing in which the first and second capacitor, the switch circuit, and the controller are disposed.

In the preferred mode of the invention, period of times in which the injections are performed at least partially overlap between the cylinders of the engine. Each of the first and second capacitors is used for one of the cylinders during the overlapping period of the injections.

The first injection group serves to produce a torque output of the engine, while the second injection group serves to recover an after-treatment device of the engine.

The fuel injection system further comprises a step-up transformer working to step-up a voltage, as produced by a battery, and supply the voltage to the first and second capacitors and a current circuit working to supply power, as produced by the battery, directly to the injectors.

The first injection group is greater in number of the injections than the second injection group. The first capacitor is greater in capacitance than the second capacitor.

The controller also works to monitor whether the first capacitor used to achieve the first injection group is malfunctioning or not. When it is determined that the first capacitor is malfunctioning, the controller controls the switch circuit to use the second capacitor to complete the first injection group.

According to the third aspect of the invention, there is provided a method of producing the above described second fuel injection system characterized in that a capacitance of each of the first and second capacitors is determined which is required to complete a corresponding one of the first and second injection groups and permits the each of the first and second capacitors to be disposed in the casing designed to meet requirements on dimensions and shape thereof.

### BRIEF DESCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is a block diagram which shows a fuel injection system according to the first embodiment of the invention;
Fig. 2(a) is a time chart which shows a change in current to energize a fuel injector;
Fig. 2(b) is a time chart which shows an on-off operation of a capacitor selection switch;
Fig. 2(c) is a time chart which shows an on-off operation of a current circuit;
Fig. 2(d) is a time chart which shows an on-off operation of a solenoid selection switch;
Fig. 2(e) is a time chart which shows an on-off operation of a step-up transformer;
Fig. 2(f) is a time chart which shows the quantity of electrical energy stored in a capacitor;
Fig. 3 is a time chart which shows a sequence of multiple injections of fuel into each of four cylinders of an engine;
Fig. 4 is a block diagram which shows a comparative example of fuel injection system;
Fig. 5 is a flowchart of a program to be executed by the first injection system of Fig. 1 to control injection of fuel into an engine;
Fig. 6 is a flowchart of a program to be executed by a first injection system according to the second embodiment of the invention;
Figs. 7(a), 7(b), and 7(c) are perspective views which show examples of an electronic control unit installed within a fuel injection system according to the third embodiment of the invention;
Fig. 8 is a flowchart of a program to design the electronic control unit, as exemplified in Figs. 7(a) to 7(c);
Fig. 9 is a view shows grouping of a sequence of multiple injections of fuel into four cylinders of an engine according to the third embodiment of the invention;
Fig. 10 is a perspective view which shows an example of an electronic control unit being designed in a manner according to the third embodiment of the invention; and
Fig. 11 is a block diagram which shows a modification of the fuel injection system of the first embodiment of the invention.

### DESCRIPTION OF THE PREFERRED EMBODIMENTS

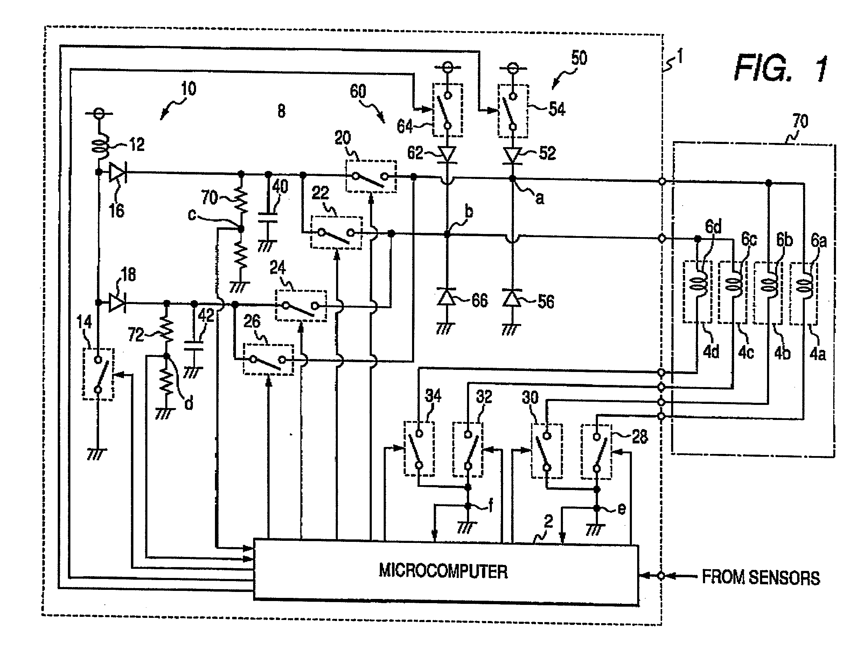

Referring to the drawings, wherein like reference numbers refer to like parts in several views, particularly to Fig. 1, there is shown a fuel injection system for internal combustion engines according to the first embodiment of the invention. The fuel injection system will be described below as being used, as an example, for a four-cylinder diesel engine 70.

The fuel injection system is constructed by the part of an electronic control unit 1 typically mounted in an automotive vehicle. The electronic control unit 1 includes a microcomputer 2 which samples outputs of engine monitoring sensors to control operations of actuators of the engine 70. Specifically, the electronic control unit 1 works to control energization of solenoids 6a, 6b, 6c, and 6d built in fuel injectors 4a, 4b, 4c, and 4d each of which injects the fuel into one of four combustion chambers of the engine 70. The energization of the solenoids 6a to 6d is achieved by a driver circuit 8 controlled by the microcomputer 2.

The driver circuit 8 is equipped with a step-up transformer 10 working to increase the level (e.g., 12V) of voltage, as produced by a storage battery installed in the vehicle, up to a selected one (e.g., 85V). The step-up transformer 10 is made of a series-connected circuit made up of a coil 12 and a switch 14. The microcomputer 2 controls on- and off-operations of the switch 14 to increase the voltage of the battery. The drive circuit 8 also includes diodes 16 and 18 which are connected at anodes thereof between the coil 12 and the switch 14.

The diode 16 is coupled at the cathode thereof to the solenoids 6a and 6b through a capacitor selection switch 20 and also to the solenoids 6c and 6d through a capacitor selection switch 22. The diode 18 is coupled at the cathode thereof to the solenoids 6a and 6b through a capacitor selection switch 24 and also to the solenoids 6c and 6d through a capacitor selection switch 26.

The solenoids 6a to 6d are joined at terminals on one side to the step-up transformer 10 through the capacitor selection switches 20 to 26 and terminals on the other side to ground through injector selection switches 28, 30, 32, and 34.

The driver circuit 8 also includes a main capacitor 40 and a sub-capacitor 42. The main capacitor 40 is joined at an end thereof between the diode 16 and a junction of the capacitor selection switches 20 and 22 and works to store electrical power stepped up by the step-up transformer 10. The sub-capacitor 42 is joined at an end thereof between the diode 18 and a junction of the capacitor selection switches 24 and 26 and works to store electrical power stepped up by the step-up transformer 10.

The capacitor selection switch 20 works to selectively establish or block electrical communication between the main capacitor 40 and the solenoids 6a and 6b. The capacitor selection switch 22 works to selectively establish or block electrical communication between the main capacitor 40 and the solenoids 6c and 6d. The capacitor selection switch 24 works to selectively establish or block electrical communication between the sub-capacitor 42 and the solenoids 6a and 6b. The capacitor selection switch 26 works to selectively establish or block electrical communication between the sub-capacitor 42 and the solenoids 6c and 6d. The microcomputer 2 works to turn on at least one of the capacitor selection switches 20 to 26 to connect corresponding two of the solenoids 6a to 6d to the step-up transformer 10 and also turn on the injector selection switches 28 to 34 selectively to energize the solenoids 6a to 6d by means of the electric energy stored in the main capacitor 40 and the sub-capacitor 42. For instance, the energization of the solenoid 6a is achieved by turning on at least one of the capacitor selection switches 20 and 26 to connect the solenoids 6a and 6b to the step-up transformer 10 and also turning on the injector selection switch 28.

A current circuit 50 is joined to a node a between the capacitor selection switches 20 and 26 and the solenoids 6a and 6b. The current circuit 50 works to maintain the energization of the solenoids 6a and 6b initiated by the main capacitor 40 and consists of a diode 52 supplying the power of the battery to the node a, a switch 54 coupling the diode 52 and the battery selectively, and a diode 56 connected to ground in the forward direction from the ground to the node *a.*

A current circuit 60 is joined to a node b between the capacitor selection switches 22 and 24 and the solenoids 6c and 6d. The current circuit 60 works to maintain the energization of the solenoids 6c and 6c initiated by the sub-capacitor 60 and consists of a diode 62 supplying the power of the battery to the node b, a switch 64 coupling the diode 62 and the battery selectively, and a diode 66 connected to ground in the forward direction from the ground to the node b.

The capacitor 40 is coupled with a series-connected resistor assembly 70. The microcomputer 2 monitors the voltage appearing at the node c of the series-connected resistor assembly 70. Similarly, the capacitor 42 is coupled with a series-connected resistor assembly 72. The microcomputer 2 monitors the voltage appearing at the node d of the series-connected resistor assembly 72. The microcomputer 2 also monitors voltages appearing at a node e downstream of the injector selection switches 28 and 30 and at a node *f* downstrearn of the injector selection switches 32 and 34. Specifically, the microcomputer 2 monitors the voltages appearing at the nodes c, *d,* e, and f to measure currents flowing through the solenoids 61 to 6d.

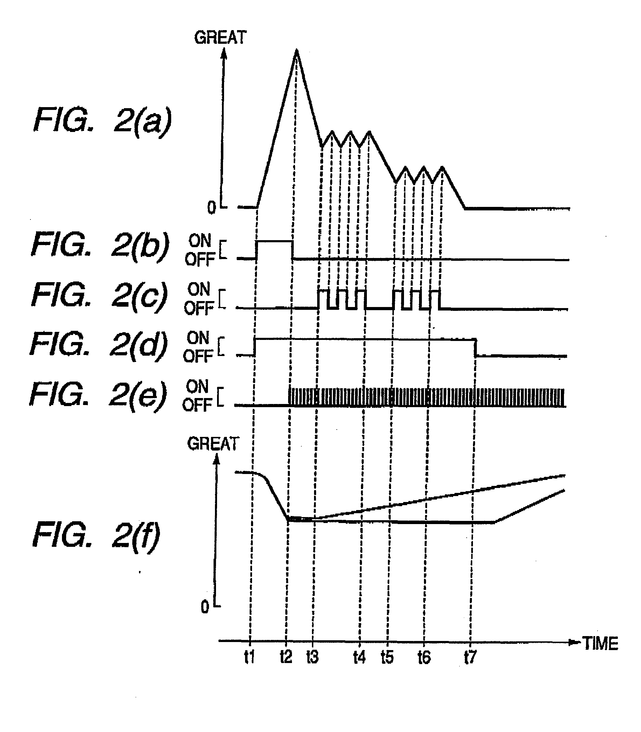

The energization of the solenoids 6a to 6d achieved by the microcomputer 2 will be described below with reference to Figs. 2(a) to 2(f).

Fig. 2(a) illustrates a change in current supplied to any one of the solenoids 6a to 6d. Fig. 2(b) illustrates on- and off-operations of any one of the capacitor selection switches 20 to 26. Fig. 2(c) illustrates on- and off-operations of the switch 54 of the current circuit 50 or the switch 64 of the current circuit 60. Fig. 2(d) illustrates on- and off-operations of any one of the injector selection switches 28 to 34. Fig. 2(e) illustrates on- and off-operations of the switch 14 of the step-up transformer 10. Fig. 2(f) illustrates a change in electrical energy stored in either of the capacitor 40 or 42.

As an example, the operations of a combination of the solenoid 6a, the capacitor selection switch 20, and the switch 54 of the current circuit 50 will be described below. Operations of other combinations of the solenoid 6b to 6d, the capacitor selection switches 20 to 26, and the switches 54 and 64 of the current circuits 50 and 60 are the same, and explanation thereof in detail will be omitted here.

When the capacitor selection switch 20 and the injector selection switch 28 are turned on at time t1, it will produce a current flow through the solenoid 6a. At time t2 when the capacitor selection switch 20 is turned off, the amount or flow rate of current flowing through the solenoid 6a has the peak (e.g., 18A) and then decreases. Between times *t3* and *t*6, the microcomputer 2 actuates the current circuit 50 to keep the current flowing through the solenoid 6a at a first intermediate flow rate (e.g., 8A) between times *t3* and t4 and at a second intermediate flow rate (e.g., 4A) between times t5 and t6 which is smaller than the first intermediate flow rate.

At time t7 after completion of the energization of the solenoid 6a by the current circuit 50, the microcomputer 2 turns off the injector selection switch 28. After time t7, the microcomputer 2 turns on and off the switch 14 of the step-up transformer 10 cyclically to charge the capacitor 40, so that the amount of electrical energy stored in the capacitor 40, as can be seen in Fig. 2(f), increases.

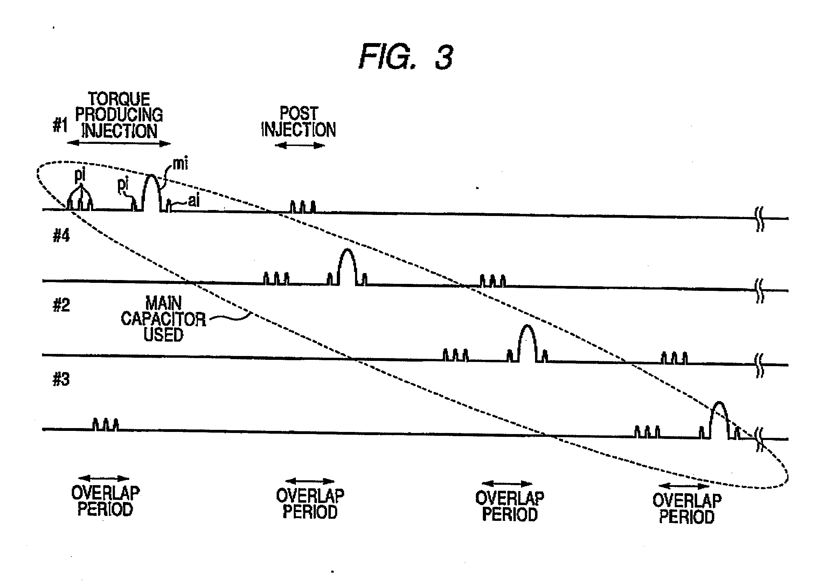

The enrgization of each of the solenoids 6a to 6d in the above manner causes a corresponding one of the fuel injectors 4a to 4d to produce a jet of fuel. Each of the fuel injectors 4a to 4d, as clearly illustrated in Fig. 3, is controlled by the microcomputer 2 to produce a sequence of post injections following a torque producing injection sequence made up of pilot injections *pi,* a main injection *mi,* and an after-injection *ai*. In Fig. 3, the first to fourth cylinders of the engine are represented by #1 to #4, respectively. Fig. 3 illustrates, as an example, that the main injection *mi* is the greatest in quantity of fuel. The quantity of fuel to be sprayed by each of the injectors 4a to 4d depends upon the length of time for which a corresponding one of the solenoids 6a to 6d is energized by the current circuit 50 or 60.

The sequence of post injections is to recover an after-treatment device installed in an exhaust system of the diesel engine. Specifically, the sequence of post injections serves to increase the temperature of a diesel particulate filter (DPF) installed in the exhaust system to burn out particulate matters (PMs) trapped in the DPF to keep it free from clogging. The increasing of the temperature of the DPF is achieved by injecting the fuel into the engine at a time not producing a torque output of the engine, e.g., during an exhaust stroke of the engine.

The microcomputer 2 initiates the sequence of post injections when the quantity of PMs in the DPF exceeds a selected upper limit. Specifically, the microcomputer 2 estimates the quantity of PMs based on operating conditions of the engine and initiates the post injections when the estimated quantity exceeds the upper limit.

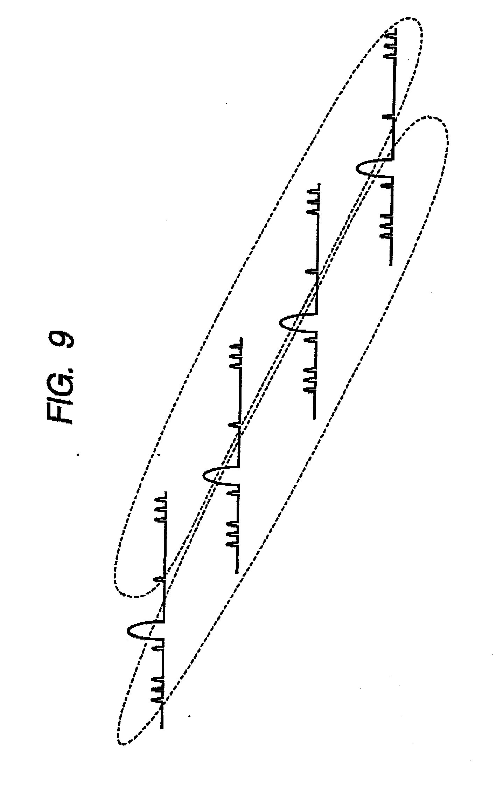

When it is required to produce the post injections, it will, as exemplified in Fig. 9, result in an increased total number of injection shots in each combustion cycle of the engine, thus requiring the capacitors 40 and 42 to have a greater capacitance. The time required for one cycle in which the multiple injections are completed will also be long, which may result in an overlap between any two of the cylinders adjacent each other in the injection timing. In such an event, it may be difficult for a system equipped with two capacitors each for use in all injections in each combustion cycle of the engine to complete the all injections. Particularly, depending upon the operating conditions of the engine, at least one of the multiple injections may overlap some of the other injections. For instance, in the example of Fig. 3, the third shot of the pilot injections pi in the fourth cylinder #4 overlaps the first shot of the post injections in the first cylinder #1. In such an event, an extreme difficulty is encountered in spraying the fuel into all the cylinders of the engine completely.

In order to avoid such a problem, the fuel injection system of this embodiment is designed to control the operations of the capacitor selection switches 20 to 26 so that one of the capacitors 40 and 42 servers to achieve a main group of injections (i.e., the torque producing injection sequence), and the other serves to achieve a post group of injections (i.e., the post injection sequence) to recover the after-treatment device in the exhaust system of the engine. Specifically, the main capacitor 40 is used for the main group of injections, while the sub-capacitor 42 is used for the post group of injections. This permits each of the capacitors 40 and 42 to be decreased in capacitance as compared with a fuel injection system equipped with capacitors each of which is used to complete all of multiple injections of fuel into one of cylinders of the engine in each combustion cycle, thus allowing each of the capacitors 40 and 42 to be reduced in size and to be mounted in a compact casing of the electronic control unit 1 which is designed to meet tight requirements on dimensions and shape thereof.

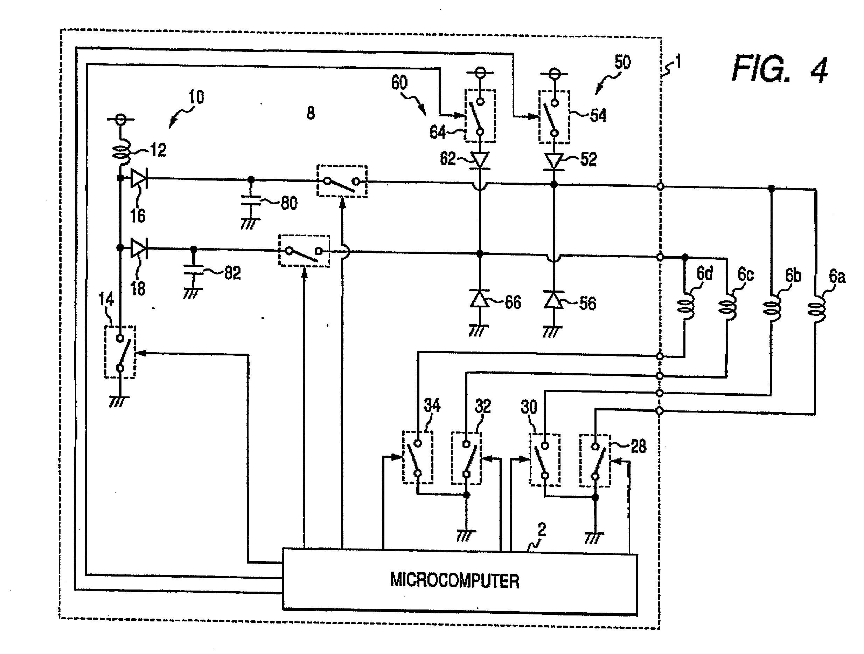

Fig. 4 illustrates a comparative example of a fuel injection system which is equipped with two capacitors 80 and 82 each of which is used to energize two of the solenoids 6a to 6d. The same reference numbers as employed in Fig. 1 represent the same parts. The capacitors 80 and 82 are, unlike the fuel injection system of this embodiment, required to have the same greater capacitance because each of the capacitors 80 and 82 is used to achieve both the torque producing injection sequence and the post injection sequence.

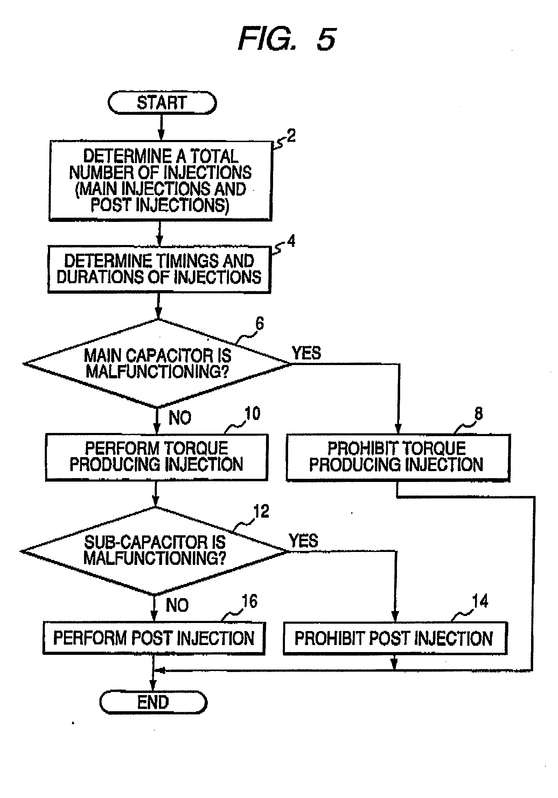

Fig. 5 shows a sequence of logical steps or program to be executed in a cycle by the microcomputer 2 to control the injections of fuel into the engine 70.

After entering the program, the routine proceeds to step 2 wherein a total number of injections of fuel to be achieved in one cycle of each cylinder of the engine 70 is determined based on operating conditions of the engine 70 in a known manner. For instance, the number of torque producing injections, that is, a total number of the pilot injections *pi*, the main injection *mi*, and the after injection ai is determined as functions of the speed of the engine 70 and the quantity of fuel to be sprayed into the engine 70. When the quantity of PMs trapped in the DPF is greater than the upper limit, the number of post injections is determined as functions of temperatures of and a difference between pressures of exhaust gasses flowing upstream and downstream of the DPF.

The routine proceeds to step 4 wherein controlled injection parameters such as a timing and a duration of each of the torque producing injections are determined. When it is required to perform the post injections, timings and durations thereof are also determined.

The routine proceeds to step 6 wherein it is determined whether the main capacitor 40 is malfunctioning or not. This determination may be made by monitoring the voltage appearing at the node c in Fig. 1. For instance, when the step-up transformer 10 is being operating or the capacitor selection switch 20 or 26 is in the on-state, but the voltage of the main capacitor 40 has a steady-state value, the microcomputer 2 determines that the main capacitor 40 is malfunctioning. If a YES answer is obtained in step 6 meaning that the main capacitor 40 is malfunctioning, then the routine proceeds to step 8 wherein the torque producing injections are prohibited. Alternatively, if a NO answer is obtained, then the routine proceeds to step 10 wherein the torque producing injections are initiated at the timings and continued for the durations, as determined in step 4, respectively. For instance, when it is required to spray the fuel into the first cylinder #1 of the engine 70, the microcomputer 2, as already discussed with reference to Fig. 2, turns on the capacitor selection switch 20 and the injector selection switch 28 to discharge the capacitor 40 to energize the solenoid 6a. After the elapse of a given period of time, the microcomputer 2 turns off the capacitor selection switch 20 and then turns on the switch 54 of the current circuit 50 cyclically, as illustrated in Fig. 2(c), to supply the current from the battery to the solenoid 6a. This completes one of the torque producing injections. For instance, when it is required to inject the fuel into the first cylinder #1 of the engine 70 six times for producing a torque output of the engine 70, the above operation is repeated six times.

The routine proceeds to step 12 wherein it is determined whether the sub-capacitor 42 is malfunctioning or not. This determination may be made by monitoring the voltage appearing at the node d in Fig. 1. For instance, when the step-up transformer 10 is being operating or the capacitor selection switch 22 or 24 is in the on-state, but the voltage of the sub-capacitor 42 has a steady-state value, the microcomputer 2 determines that the sub-capacitor 42 is malfunctioning. If a YES answer is obtained in step 12 meaning that the sub-capacitor 42 is malfunctioning, then the routine proceeds to step 14 to prohibit the post injections from being initiated. Alternatively, if a NO answer is obtained, then the routine proceeds to step 16 wherein the post injections are initiated at the timings and each continued for the durations, as determined in step 4, respectively.

After step 8, 14, or 16, the routine terminates.

As apparent from the above discussion, the fuel injection system is equipped with the microcomputer 2 which works to control the operation of the drive circuit 8 so that the main capacitor 40 is discharged to achieve the torque producing injection sequence to produce the torque in the engine 70, and then the sub-capacitor 42 is discharged to achieve the post injections to recover the after-treatment device, such as the DPF, installed in the exhaust system of the engine 70. This permits a total capacitance of the capacitors 40 and 42 to be decreased as compared with the system, as illustrated in Fig. 4, which is equipped with the two capacitors 80 and 82 to be each discharged to achieve both the torque producing injections and the post injections. This permits the size of the capacitors 40 and 42 to be reduced and facilitates meeting of requirements on mechanical specifications of a casing of the electronic control unit 1. Further, even when the duration in which the multiple injections are performed in one of the cylinders of the engine 70 overlaps with that in another cylinder, the length of time one of the capacitors 40 and 42 is used to achieve a single sequence of multiple injections is short, thus permitting each of the capacitors 40 and 42 to be used for one of the cylinders of the engine 70 during the overlapping of the injections.

The main capacitor 40 used to achieve the torque producing injection sequence is greater in capacitance than the sub-capacitor 42 used to achieve the post injection sequence, thus permitting the size of the sub-capacitor 42 to be reduced.

The electronic control unit 1 is equipped with the current circuits 50 and 60 working to supply the power of the battery directly to the fuel injectors 4a to 4d. The microcomputer 2 may, thus, regulate the duration of each of the multiple injections using the current circuits 50 and 60, thereby minimizing the quantity of electrical energy stored in the capacitors 40 and 42 to be consumed to achieve the multiple injections.

The fuel injection system of the second embodiment will be described below which is designed to use the sub-capacitor 42 for the torque producing injection sequence when it is determined that the main capacitor 40 is malfunctioning. The fuel injection system is similar in structure to that of the first embodiment, and explanation thereof in detail will be omitted here.

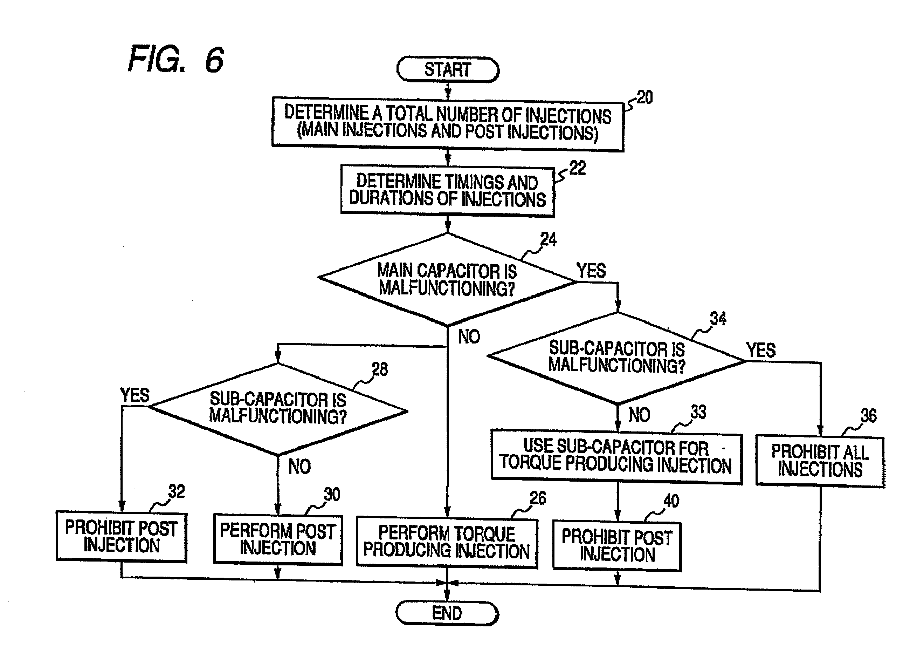

Fig. 6 shows a program to be executed in a cycle by the microcomputer 2 of the fuel injection system of the second embodiment to control the spraying of fuel into the engine 70.

After entering the program, the routine proceeds to step 20 wherein a total number of the torque producing and post injections to be achieved in one cycle of each cylinder of the engine 70 is determined in the same manner, as described in step 2 of Fig. 5, based on operating conditions of the engine 70.

The routine proceeds to step 22 wherein controlled injection parameters such as a timing and a duration of each of the torque producing injections are, like in step 4 of Fig. 5, determined. When it is required to perform the post injections, timings and durations thereof are also determined.

The routine proceeds to step 24 wherein it is determined whether the main capacitor 40 is malfunctioning or not in the same manner, as discussed in step 6 of Fig. 5.

If a NO answer is obtained in step 24 meaning that the main capacitor 40 is operating properly, then the routine proceeds to step 26 wherein the torque producing injections are initiated at the timings and continued for the durations, as determined in step 22, respectively, in the same manner, as described in the first embodiment.

Additionally, if the NO answer is obtained in step 24, the routine also proceeds to step 28 wherein it is determined whether the sub-capacitor 42 is malfunctioning or not in the same manner, as in step 12 of Fig. 5. If a NO answer is obtained meaning that the sub-capacitor 42 is operating properly, then the routine proceeds to step 30 wherein the post injections are initiated at the timings and each continued for the durations, as determined in step 22, respectively. Alternatively, if a YES answer is obtained, then the routine proceeds to step 32 to prohibit the post injections from being performed.

If a YES answer is obtained in step 24 meaning that the main capacitor 40 is malfunctioning, then the routine proceeds to step 34 wherein it is determined whether the sub-capacitor 42 is malfunctioning or not in the same manner, as in step 12 of Fig. 5. If a YES answer is obtained meaning that the sub-capacitor 42 is malfunctioning, then the routine proceeds to step 36 wherein the post injections are prohibited from being performed.

Alternatively, if a NO answer is obtained in step 34 meaning that the sub-capacitor 42 is operating properly, then the routine proceeds to step 38 wherein the sub-capacitor 42 is used to achieve the torque producing injections. For instance, when it is required to spray the fuel into the first cylinder #1 of the engine 70, the microcomputer 2 turns on the capacitor selection switch 26 and the injector selection switch 28 to discharge the sub-capacitor 42 to energize the solenoid 6a. After the elapse of a given period of time, the microcomputer 2 turns off the capacitor selection switch 26 and then turns on the switch 54 of the current circuit 50 cyclically to supply the current from the battery to the solenoid 6a. This completes one of the torque producing injections.

After completion of all the torque producing injections in step 38, then the routine proceeds to step 40 wherein the post injection are prohibited from being performed.

After step 26, 30, 32, 36, or 40, the routine terminates.

The electronic control unit 1 of the third embodiment will be described below.

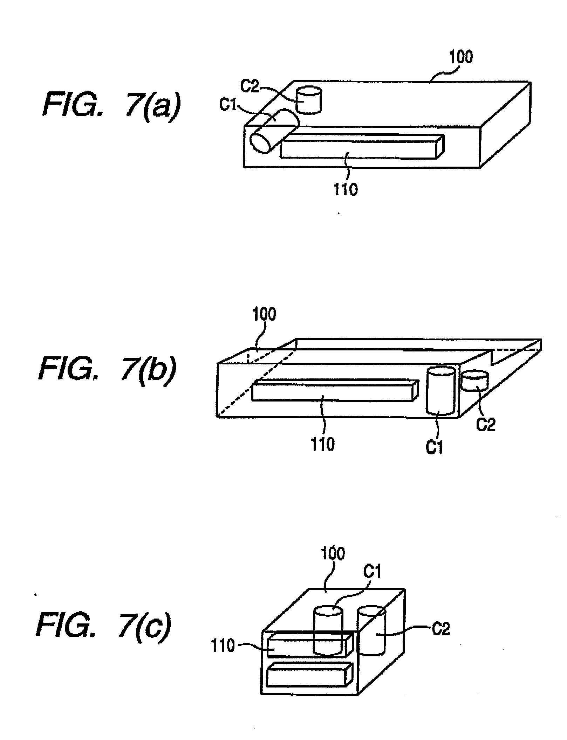

Figs. 7(a), 7(b), and 7(c) show examples of a casing 100 of the electronic control unit 1, respectively, which have dimensions and shapes different from each other, as selected according to specification requirements. The casing 100 is required to have various parts, such as a connector(s) 110, installed therein. The capacitors *C1* and C2 to be disposed in the casing 100 are, therefore, subjected to restraints on dimensions thereof.

Fig. 7(a) illustrates the example where the casing 1.00 is subject to a great restriction on the height thereof, therefore, one of the capacitors *C1* and C2 is selected to be smaller in capacitance than the other, and the capacitors *C1* and C2 are used to cover a sequence of injections broken down into a plurality of groups to be made in each cycle of the engine 70. The capacitor *C1* having a greater capacitance is difficult to install vertically and thus laid horizontally.

Fig. 7(b) illustrates the example similar to Fig. 7(a) where the casing 100 has a difficulty to install two capacitors together both of which have a greater capacitance, therefore, the capacitor *C1* is selected to have a smaller capacitance, and the capacitors *C1* and C2 are used to cover a sequence of injections broken down into a plurality of groups to be made in each cycle of the engine 70. The capacitor *C2* having a greater capacitance is, however, laid vertically.

Fig. 7(c) illustrates the example where a sequence of injections to be made using the electrical energy stored in the capacitors *C1* and C2 in each cycle of the engine 70 is broken down into groups so that the capacitors *C1* and C2 may have substantially the same capacitance.

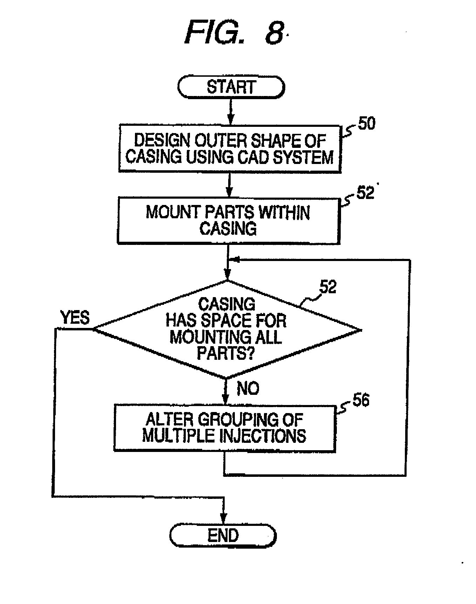

Fig. 8 shows a sequence of procedures for manufacturing the electronic control unit 1 of this embodiment.

First, in step 50, the profile or outer shape of the casing 100 is designed using CAD (Computer-Aided Design) software or system so as to meet requirements on dimensions and shape of the casing 100.

The routine proceeds to step 52 wherein all component parts of the electronic control unit 1, such as the drive circuit 8, the microcomputer 2, and the connector(s) 110, as illustrated in Fig. 1, except the capacitors *C1* and C2 are installed within the casing 100 in the CAD system.

In the case where the fuel injection system is so engineered that the period of time in which a sequence of multiple injections is to be performed in each combustion cycle of the engine 70 at least partially overlaps between some of the cylinders of the engine 70, the sequence of multiple injections is broken down into groups. The capacitors *C1* and C2 are assigned to separate ones of the groups so that the capacitors *C1* and C2 may not be used for the same cylinder of the engine 70 during the overlap period. For instance, all injections of fuel into the four cylinders in each cycle of the engine 70 are, as exemplified in Fig. 9, classified into two groups: one is enclosed by a dotted line and made using one of the capacitors *C1* and C2, and the other by a chain line and made using the other one. The microcomputer 2 uses each of the capacitors *C1* and C2 to spray the fuel into one of the cylinders of the engine 70 during the overlap period. In the example of Fig. 9, first five shots of the injections are enclosed by the dotted line, while remaining four shots of the injections are enclosed by the chain line. Specifically, the two groups are substantially identical in number of the injections, thus permitting the capacitors *C1* and C2 to have substantially the same capacitance.

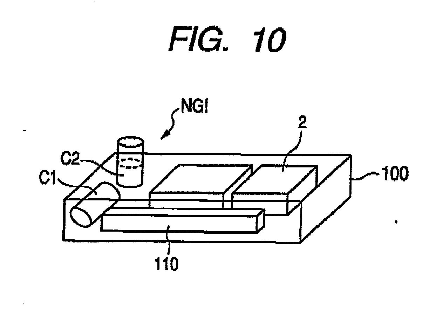

After step 52, the routine proceeds to step 54 wherein it is determined whether the casing 100 has space enough to accommodate all parts of the electronic control unit 1 or not. Fig. 10 illustrates for the case where it is impossible to mount the capacitor C2 within the casing 100 completely. In such a case, a NO answer is obtained in step 54. The routine then proceeds to step 56 wherein the grouping of the injections in each of the cylinders of the engine 70 is altered. For instance, the grouping, as illustrated in Fig. 9, is altered into the one of Fig. 3. This permits the capacitor C2 to be reduced to a size small enough to be installed within the casing 100.

After step 56, the routine returns back to step 54. Specifically, the grouping in step 56 is made in a different manner until a YES answer is obtained in step 54. A part or all of the operations in steps 54 and 56 may be made automatically in the following steps.
5-1) All parts other than the capacitors *C1* and C2 are disposed within the housing 100.
5-2) The greatest possible capacitance or size of a capacitor which is mountable within an empty space unoccupied by any part within the casing 100 is calculated.
5-3) A determination is made as to whether it is possible for the capacitor, as selected in step 5-2, to achieve all required injections of fuel into the engine 70 or not.
5-4) If it is determined in step 5-3 that it is impossible for the capacitor to complete the all required injections of fuel into the engine 70, the multiple injections to be made in each combustion cycle of the engine 70 are split into a selected number of groups. For instance, they are grouped into the torque producing injection sequence and the post injection sequence.
5-5) The capacitance of a capacitor required to complete one of the groups which is the greatest in the number of injections is calculated. A determination is made whether the capacitance is lower than or equal to the greatest possible capacitance, as calculated in step 5-2, or not.
6) If it is determined in step 5-5 that the capacitance is greater than the greatest possible capacitance, step 5-4 is executed again to alter the groups. Subsequently, steps 5-5 and 5-6 are executed again. Specifically, in step 5-4, the all required injections of fuel into the engine 70 are divided into different groups. For example, in the case where the injections are grouped into the torque producing injection sequence and the post injection sequence, the after-injection *ai* is removed from the torque producing injection sequence and added to the post injection sequence. When the capacitance of the capacitor required to complete one of the groups which is the greatest in number of injections becomes lower than the greatest possible capacitance, as calculated in step 5-2, the sequence of step 5-2 to 5-6 is repeated with respect to an empty space within the casing 100 when the capacitor to be used to achieve the one of the groups which is the greatest in number of injections is installed in the casing 100.

It is advisable that the injections to be made in each combustion cycle of the engine 70 be classified into groups according to the function or purpose thereof. For instance, the injections are classified into a post injection group, an after-injection group, a main injection group, and a pilot injection group. Two or some of the injections closer in time to each other may be selected to belong to the same group so that each capacitor is used for one of the cylinders of the engine 70 during a period of time in which the injections overlap in time sequence between the cylinders of the engine 70.

The electronic control unit 1 made in the above manner may be so designed, like the second embodiment, that if one of the capacitors is determined to be malfunctioning, the other is, instead, used for the injections of fuel into the engine 70 to be made by the one.

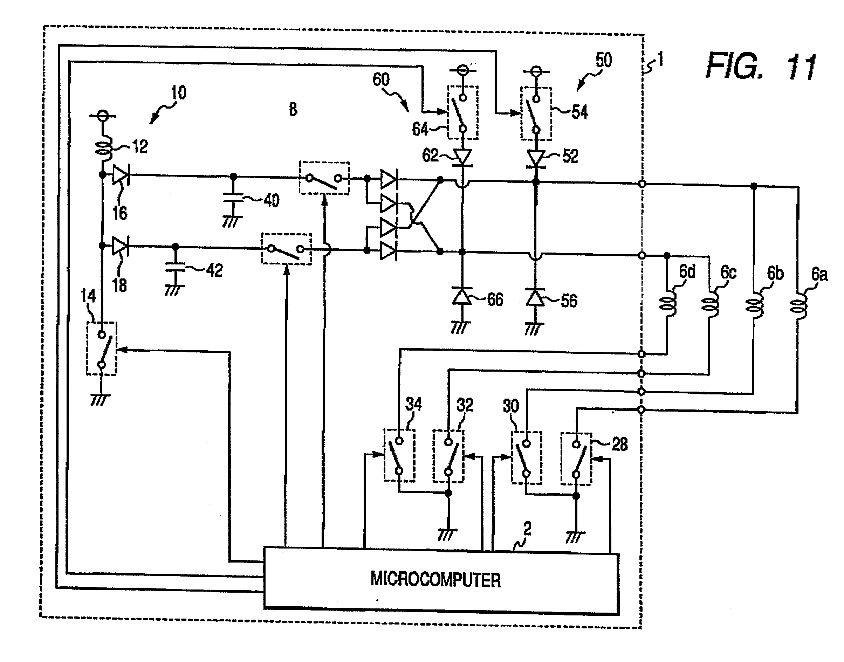

Fig. 11 shows a modification of the electronic control unit 1 which is different from the one of Fig. 1 in that two capacitor selection switches 80 and 84 are used, each of which works to make a connection of one of the capacitors 40 and 42 with two of the solenoids 6a to 6d. The electronic control unit 1 also includes four diodes 90 connected in the illustrated manner. Other arrangements are identical with those in Fig. 1, and explanation thereof in detail will be omitted here.

The current circuit 50 and 60 working to supply the power of the battery directly to the fuel injectors 4a to 4d may be omitted from the electronic control unit 1 in each of the above embodiments. This also offers the same advantages as described above.

The number of groups of the injections of fuel into the engine 70 to be achieved in each combustion cycle using the electrical energy stored in the capacitors 40 and 42 is not limited to two (2). Similarly, the number of capacitors used to energize the solenoids 6a to 6d is not limited to two.

The number of the cylinders of the engine 70 may be changed. The structure of the drive circuit 8 may also be changed.

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiments witch can be embodied without departing from the principle of the invention as set forth in the appended claims.

A fuel injection system for internal combustion diesel engines is provided which is designed to produce a sequence of multiple injections of fuel into each cylinder of the engine. The sequence of multiple injections is split into, for example, a first and a second groups. The system is equipped with, for example, two capacitors which is discharged to energize electronically controlled fuel injectors to achieve the fuel injections. Each of the capacitors is used for one of the first and second groups, thereby permitting the capacitors to be reduced in capacitance or size thereof. A production method of such a system is also provided.

## Claims

1. A fuel injection system for an internal combustion engine comprising:
an electronically controlled injector which works to spray fuel into a cylinder of an engine;
a first and a second capacitor selectively working to energize said injector to produce a spray of the fuel;
a switch circuit working to selectively connect one of said first and second capacitors to said injector to discharge the one to energize said injector; and
a controller working to control an operation of said injector to achieve a sequence of multiple injections of the fuel into the cylinder of the engine in each combustion cycle of the engine, said controller splitting the sequence of multiple injections into a first injection group serving to produce a torque output of the engine and a second injection group serving to recover an after-treatment device of the engine, said controller actuating said switch circuit to selectively establish a connection of the first capacitor to said injector to achieve the first injection group and a connection of the second capacitor to said injector to achieve the second injection group.

2. A fuel injection system as set forth in claim 1, wherein said first capacitor is greater in capacitance than said second capacitor.

3. A fuel injection system as set forth in claim 1 or 2, further comprising a step-up transformer working to step-up a voltage, as produced by a battery, and supply the voltage to the first and second capacitors and a current circuit working to supply power, as produced by the battery, directly to said injector.

4. A fuel injection system as set forth in any one of claims 1 to 3, wherein said controller also works to monitor whether said first capacitor used to achieve the first injection group is malfunctioning or not, and wherein when it is determined that said first capacitor is malfunctioning, said controller controls said switch circuit to use said second capacitor to complete the first injection group.

5. A fuel injection system for an internal combustion engine comprising:
electronically controlled injectors each of which works to spray fuel into one of cylinders of an engine;
a first and a second capacitor selectively working to energize said injectors to produce sprays of the fuel;
a switch circuit working to selectively connect one of said first and second capacitors to a corresponding one of said injectors to discharge the one of said first and second capacitors to energize the corresponding one of said injectors;
a controller working to control an operation of each of said injectors to achieve a sequence of multiple injections of the fuel into the one of the cylinders of the engine in each combustion cycle of the engine, said controller splitting the sequences of multiple injections into a first injection group and a second injection group, said controller actuating said switch circuit to selectively establish a connection of the first capacitor to said injectors to achieve the first injection group and a connection of the second capacitor to said injectors to achieve the second injection group; and
a casing in which said first and second capacitor, said switch circuit, and said controller are disposed.

6. A fuel injection system as set forth in claim 5, wherein the injections at least partially overlap between the cylinders of the engine, and wherein each of said first and second capacitors is used for one of the cylinders during overlapping of the injections.

7. A fuel injection system as set forth in claim 5 or 6, wherein the first injection group serves to produce a torque output of the engine, and the second injection group serves to recover an after-treatment device of the engine.

8. A fuel injection system as set forth in any one of claims 5 to 7, further comprising a step-up transformer working to step-up a voltage, as produced by a battery, and supply the voltage to the first and second capacitors and a current circuit working to supply power, as produced by the battery, directly to said injectors.

9. A fuel injection system as set forth in claim 8, wherein the first injection group is greater in number of the injections than the second injection group, and wherein said first capacitor is greater in capacitance than said second capacitor.

10. A fuel injection system as set forth in any one of claims 5 to 9, wherein said controller also works to monitor whether said first capacitor used to achieve the first injection group is malfunctioning or not, and wherein when it is determined that said first capacitor is malfunctioning, said controller controls said switch circuit to use said second capacitor to complete the first injection group.

11. A method of producing a fuel injection system as set forth in claim 5, **characterized in that** a capacitance of each of said first and second capacitors is determined which is required to complete a corresponding one of the first and second injection groups and permits the each of said first and second capacitors to be disposed in said casing designed to meet requirements on dimensions and shape thereof.
